# EUROPEAN PATENT APPLICATION

(11) **EP 1 818 151 A1**
(43) Date of publication of application: **15.08.2007**
(21) Application number: 06075952.9
(22) Date of filing: 25.04.2006
(51) Int. Cl.: B28D 1/18, B23C 5/04

(54) **Rotatory reversible milling tool**

(30) Priority: 08.02.2006 EP 06075279
(71) Applicant: Blastrac B.V., 3433 PN Nieuwegein (NL)
(72) Inventor: van Houten, Adrianus Gerardus, 3998 MB Schalkwijk (NL)
(74) Representative: Houben, Christiaan Hein Willem Frans

(57) **Abstract**

The invention provides a cutter blade (4) adapted to be arranged in a milling drum (1) of a milling machine. The cutter blade (4) has an annular body (7), and peripheral teeth (8) arranged at the annular body (7). The teeth (8) have a tooth face (9) and a clearance face (10) which intersect at a cutting edge (11). The teeth (8) are alternately arranged such that the tooth face (9) of one tooth (8a) is oriented in one tangential direction and the tooth face (9) of a neigbouring tooth (8b) is oriented in an opposite tangential direction. Thus a more versatile cutter blade is provided.

## Description

The invention relates to a cutter blade adapted to be arranged in a milling drum of a milling machine, the cutter blade having an annular body, and peripheral teeth arranged at the annular body, the teeth having a tooth face and a clearance face which intersect at a cutting edge.

In EP 1 300 226 Al is in Fig. 3 shown a cutter blade for arrangement in a milling drum. The known cutter blade has peripheral teeth, which each have a tooth face and a clearance face which intersect at the cutting edge. All tooth faces of the known cutter blade are directed in one direction.

The invention has for an object to provide a more versatile cutter blade.

This object is achieved by a cutter blade according to the preamble of claim 1, wherein the teeth are alternately arranged such that the tooth face of one tooth is oriented in one tangential direction and the tooth face of a neigbouring tooth is oriented in an opposite tangential direction.

In JP 8284392 is shown an example of a rotary milling machine with a milling drum. The milling drum typically comprises a rotary shaft and a plurality of carrying rods that are arranged at the periphery of the drum and are extending parallel to the shaft. The cutter blades are arranged freely rotatable on the carrying rods. Upon rotation of the drum the cutter blades engage with their teeth the surface to be treated.

Use of a milling drum with cutting blades according to the invention can advantageously be used to remove flexible layers or harder coatings from e.g. concrete surfaces and provides a better and relatively smooth milling result, due to the two-way cutting action possibility of the cutter blades.

Preferred embodiments of the invention are described in the dependent claims 2-11.

The invention will be described in more detail in the following with reference to the accompanying drawing, in which:
Fig. 1 shows a perspective view of a preferred embodiment of a cutter blade according to the invention,
Fig. 2 shows a side elevational view of the cutter blade of Fig. 1,
Fig. 3 shows a top elevational view of the cutter blade according to Fig. 1, and
Fig. 4 shows a top elevational view of a milling drum of a milling machine.

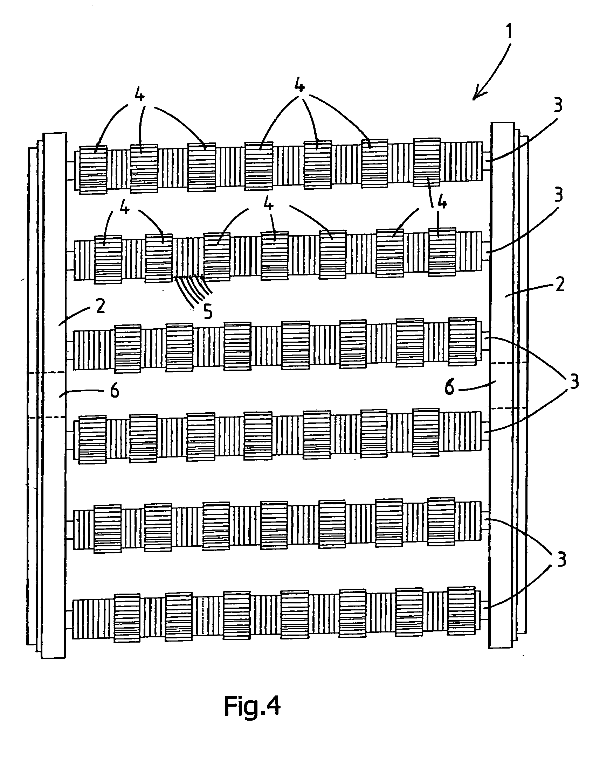

In Fig. 4 is shown a milling drum 1 of a milling machine. The milling drum 1 has two side plates 2 with a circular disc shape. The side plates 2 of the drum 1 are interconnected by carrying rods 3. On the carrying rods 3 are arranged cutter blades 4, such that the cutter blades 4 are freely rotatable with respect to the carrying rods 3. Also on the carrying rods 3, between the cutter blades 4, are arranged spacer rings 5. The side plates 2 are provided with a central opening 6 through which a rotational driving shaft (not shown) can be inserted, which shaft is designed to bring the drum in a rotational movement and can have round or polygonal cross sectional shape. The driving shaft can be driven by a motor via a gear, a belt or another transmission means.

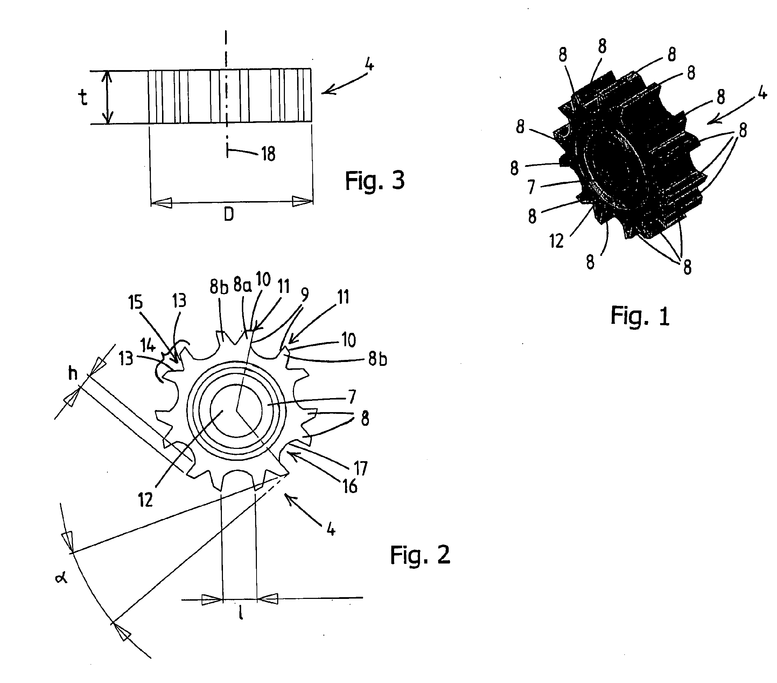

In Figs. 1-3 the cutter blade 4 is illustrated in more detail.

The cutter blade 4 has an annular body 7 with a centre hole 12 through which in a mounted state of the cutter blade 4 the carrying rod 3 passes. On the annular body 7 are arranged peripheral teeth 8.

The teeth 8 have a tooth face 9 and a clearance face 10 which intersect at a cutting edge 11. Furthermore the teeth 8 have a rear face 13. The teeth 8 have a tooth height *h*, which is the distance between the cutting edge 11 and the foot of the tooth 8. The clearance face has a clearance angle α.

The cutter blade is preferably entirely made from hardmetal, more preferably from Tungsten Carbide. It would also be possible to make only the teeth from hard metal and the annular body from a less hard material, although this would complicate the fabrication of the cutter blade.

The teeth 8 are arranged in an altenate fashion such that the tooth face 9 of one tooth 8a is oriented in one tangential direction and the tooth face 9 of a neigbouring tooth 8b is oriented in an opposite tangential direction (see Fig. 2). The differently oriented teeth 8a and 8b can have a different shape, e.g. a different clearance angle α.

In the preferred embodiment shown in Figs. 1-3 the tooth faces 9 of the teeth 8 extend perpendicular with respect to the centre axis 18 of the annular body 11, and preferably the tooth face 9 of each tooth 8 lies in a imaginary plane which extends radially through the centre axis 18 of the annular body 7 (cf. Fig. 2).

In the preferred embodiment shown in Figs. 1-3 the teeth 8 are arranged in pairs. In Fig. 2 a pair is indicated by reference numeral 14. The teeth 8a, 8b of a single pair 14 are are separated by a V-shaped groove 15 and the walls of the groove 15 are constituting the respective rear faces 13 of the teeth 8a, 8b.

The teeth 8 of which the tooth faces 9 are oriented towards eachother are separated by a flute 16 with a slightly concavely rounded bottom surface 17.

To give an indication of the dimensions of a practically usable cutter blade by way of non limiting example: The cutter blade 4 may have an outer diameter D of for example between 45 and 50 mm, preferably 47 mm. The ratio between the outer diameter D of the blade and the thickness *t* of the blade may be about 3 and the thickness *t* can be for example 15 mm. The tooth height *h* is for example around 4 mm. The tangential distance *l* between two cutting edges 11 of two facing teeth 8 is around 10 mm. The clearance angle α can be 15° for the teeth 8a oriented in one tangential direction and 20° for the teeth 8b oriented in the other tangential direction. The cutter blade 4 of the example has seven tooth pairs combined with the outer diameter D of 47 mm.

The cutter blade 4 according to the invention is able to cut in two directions. If all teeth on the cutter blade are exactly the same this would mean that it does not matter in what direction the milling drum 1 is rotated. If the teeth 8a are differently shaped from the teeth 8b a different milling effect can be achieved by reversing the rotation direction of the miling drum 1.

It is to be understood that the given dimensions are for indicative purposes only. The cutter blade may well have other dimensions, as long as the mutual proportions are such that the cutter blade can remain to perform its function.

## Claims

1. Cutter blade (4) adapted to be arranged in a milling drum (1) of a milling machine, the cutter blade (4) having an annular body (7), and peripheral teeth (8) arranged at the annular body (7), the teeth (8) having a tooth face (9) and a clearance face (10) which intersect at a cutting edge (11), **characterized in that** the teeth (8) are alternately arranged such that the tooth face (9) of one tooth (8a) is oriented in one tangential direction and the tooth face (9) of a neigbouring tooth (8b) is oriented in an opposite tangential direction.

2. Cutter blade according to claim 1, wherein the tooth faces (9) of the teeth (8) are extending perpendicular with respect to the centre axis (18) of the annular body (7).

3. Cutter blade according to claim 1 or 2, wherein the tooth face (9) of each tooth (8) lies in a imaginary plane which extends radially through the centre axis (18) of the annular body (7).

4. Cutter blade according to any of the preceding claims, wherein the teeth (8) are arranged in pairs (14), which teeth (8) of such a pair (14) are oriented to each other with respective rear faces (13).

5. Cutter blade according to claim 4, wherein the teeth (8) of a pair (14) are separated by a groove (15).

6. Cutter blade according to claim 5, wherein the groove (15) is V-shaped.

7. Cutter blade according to any of the preceding claims, wherein the teeth (8) of which the tooth faces (9) are oriented towards eachother are separated by a flute (16) with a rounded bottom (17).

8. Cutter blade according to any of the preceding claims, wherein the ratio between the outer diameter (*D*) of the blade (4) and the thickness (t) of the blade (4) is about 3.

9. Cutter blade according to any of the preceding claims, wherein the ratio between the outer diameter (*D*) and the tooth height (*h*) is within the range of from 10 to 12.

10. Cutter blade according to any of the preceding claims, wherein the blade (4) has seven tooth pairs (14) combined with an outer diameter (*D*) of the blade (4) within the range of from 45mm to 50mm.

11. Cutter blade according to any of the preceding claims, wherein the cutter blade (4) is made from hardmetal, preferably Tungsten Carbide.
